# EUROPEAN PATENT SPECIFICATION

(11) **EP 1 033 265 B1**
(45) Date of publication and mention of the grant of the patent: **04.06.2003**
(21) Application number: 00103782.9
(22) Date of filing: 23.02.2000
(51) Int. Cl.: B60C 1/00, B60C 11/01, C08L 7/00, C08L 9/00

(54) **Tire with reinforced rubber sidewall**
Reifen mit verstärktem Seitenwandgummi
Bandage pneumatique à gomme de flanc renforcée

(30) Priority: 02.03.1999 US 260815
(43) Date of publication of application: 06.09.2000
(73) Proprietor: THE GOODYEAR TIRE & RUBBER COMPANY, Akron, Ohio 44316-0001 (US)
(72) Inventor: Zanzig, David John, Uniontown, Ohio 44685 (US); Bezilla, Bernard Matthew, Jr., Stow, Ohio 44224 (US); Sandstrom, Paul Harry, Tallmadge, Ohio 44278 (US)
(74) Representative: Leitz, Paul

(56) References cited:
- EP-A- 0 508 813
- EP-A- 0 989 161
- WO-A-99/52720

## Description

### Field

This invention relates to a pneumatic rubber tire having a rubber sidewall of a lug and groove configuration which is designed to be ground contacting. Such sidewall configuration is of a rubber composition comprised of a blend of natural rubber and cis 1,4-polybutadiene rubber which contains carbon black and silica together with a coupling agent.

### Background

Pneumatic rubber tires are conventionally composed of a toroidal carcass with a circumferential tread and adjoining sidewalls.

The tread is conventionally designed to be ground-contacting and thereby is of a suitable rubber composition for such purpose and also is of a suitable configuration. For example, such a tread may have properties which emphasize good traction and resistance to treadwear. Such tires may have a tread of a lug and grove configuration which is designed to be ground-contacting.

In contrast, the associated sidewalls are conventionally not designed to be ground contacting and, in order to be appropriately supportive of the tread, are conventionally composed of a rubber composition which is not designed for traction and resistance to treadwear but, instead, of a rubber composition which is of low hysteresis to provide low heat buildup and is softer to provide greater flexibility than that of the tread rubber.

As a result, such softer sidewall rubber compositions typically have less resistance to puncturing objects, abrasion and to scuffing against road curbs or other objects.

However, some tires are desired to be utilized under more harsh conditions such as, for example, rough roads or off-the-road service or on specialty vehicles which may be designed to run on low inflation tires where the tire sidewall may come in contact with the ground. Such circumstances may occur, for example, in various mine operations and in logging operations, or where the tire is run over rough terrain at low inflation pressures. Under such conditions, growth of a crack, or cut, in the sidewall and, also, resistance to puncture, are significant considerations.

A significant need for a sidewall rubber composition for such use is a hybrid rubber composition which with suitable resistance to puncture and abrasion typically associated with tread rubber compositions while substantially maintaining flex fatigue and hysteretic properties typically associated with sidewall rubber compositions.

It is appreciated that commercially available tires may sometimes have sidewalls designed to be resistant to cut growth which are comprised of carbon black reinforced elastomer compositions comprised of natural rubber and cis 1,4-polybutadiene rubber.

It is also appreciated that carbon blacks for reinforcement of tire sidewall rubber compositions are conventionally of appreciably larger particle size than carbon blacks usually used for tire treads since resistance to heat buildup rather than abrasion resistance is typically more important for tire sidewalls.

Such carbon black might be exemplified, for example, by having an Iodine value (number) (ASTM D1510) in a range of 35 to 85 g/kg instead of a higher iodine value of at least 105 which would be more representative of a carbon black typically used for a tread rubber composition.

Here, however, it is desired to provide a novel tire with rubber sidewall of a composition comprised of natural rubber and cis-1,4-polybutadiene of which a significant portion is designed to be occasionally ground-contacting and thereby having a resistance to puncture as well as resistance to abrasion more typical of tire tread rubber compositions yet substantially retaining flexibility and low hysteresis usually required for a tire sidewall.

It may be readily thought of to increase the natural rubber content of the sidewall composition in order to increase resistance to tear. However the cis-1,4-polybutadiene content would be correspondingly reduced which would be expected to thereby undesirably reduce its resistance to abrasion and undesirably increase its hysteresis (as would be expected to be evidenced by a reduction in its rebound property).

Accordingly, it is desired herein to provide such a tire sidewall of a rubber composition which contains large particle size carbon black reinforcement common for sidewall compositions and which is composed of natural rubber and cis 1,4-polybutadiene elastomers, also somewhat common to many sidewall compositions but, however, which has enhanced resistance to abrasion and puncturing objects and, also enhanced resistance to tear more common to tire tread rubber compositions.

In the description of this invention, the term "phr" relates to parts by weight of an ingredient per 100 parts by weight of rubber.

The terms "rubber" and "elastomer" are used interchangeably.

The term "Tg" relates to a glass transition temperature of an elastomer, normally determined by a differential scanning (DSC) calorimeter with a temperature rise of 10°C per minute.

### Disclosure and Practice of the Invention

In accordance with this invention, a pneumatic rubber tire is provided with a carcass with circumferential rubber tread and associated sidewalls, wherein said tread and a portion of said sidewalls are of a lug and groove configuration designed to be ground-contacting, wherein said lug and groove configuration extends from said tread over at least thirty, preferably at least fifty, percent of the tire sidewall adjacent to said tread, and even more preferably at least to a maximum section width of the tire, and wherein a major portion of said lug and groove configured portion of said sidewall is of a rubber composition which comprises, based on 100 parts by weight rubber (phr), (A) elastomers comprised of (i) 40 to 80, preferably 45 to 70, phr of cis-1,4-polyisoprene natural rubber and (ii) 20 to 60, preferably 30 to 55, phr of cis-1,4-polybutadiene rubber, (B) 55 to 80 phr of reinforcing filler comprised of carbon black and precipitated silica which is comprised of (i) 5 to 40 phr of carbon black having an Iodine value of 35 to 85 g/kg and a dibutylphthalate (DBP) value of 70 to 130 cm³/100g and (ii) 10 to 70 phr of precipitated silica having a BET surface area of 125 to 200 m²/g; wherein the weight ratio of silica to carbon black is in a range of 0.3/1 to 3/1, preferably 0.8/1 to 1.5/1 and (C) a coupling agent having a moiety reactive with silanol groups on said silica and another moiety interactive with said elastomers.

In particular, use of natural rubber, silica and coupling agent of the sidewall rubber composition is designed to enhance resistance to tear, puncturing and abrasion while substantially maintaining hysteresis, or rebound physical property, of the sidewall rubber composition.

In particular, use of cis-1,4-polybutadiene rubber in the sidewall rubber composition is designed to enhance resistance to abrasion and promoting or maintaining a relatively low hysteresis (relatively high rebound property).

In one aspect of the invention, a relative immiscibility of the cis-1,4-polybutadiene rubber phase in the natural rubber phase is relied upon to contribute a resistance to cut/crack growth propagation for the sidewall composition. The relative immiscibility is primarily a result of a wide disparity of the glass transition temperatures (Tg's), namely differing by at least 30°C, of the cis-1,4-polybutadiene rubber (e.g.: -100°C to -106°C) and the natural rubber (e.g.: -65°C to -70°C). Such immiscibility phenomenon due to disparity of Tg's of various elastomers is well known to those skilled in such art.

In order to enhance such disparity of Tg's for the elastomers of the sidewall rubber composition, it is preferred that the sidewall rubber composition does not contain elastomer(s) with Tg's intermediate (between) the aforesaid Tg's of said natural rubber and cis-1,4-polybutadiene rubber, namely elastomers having a Tg in a range of -70°C and -100°C.

Accordingly, in order to provide such a sidewall rubber composition for the sidewall lug and groove configuration designed to be ground contacting which is therefore both resistant to tear and also resistant to abrasion, the blend of natural rubber and cis-1,4-polybutadiene rubber blend, with their aforesaid spaced apart Tg's is reinforced with a combination of relatively large size carbon black and particulate silica together with a coupling agent.

In particular, the larger size carbon black is a carbon black conventionally used for rubber sidewalls and is in contrast to relatively small size carbon blacks conventionally used for tire tread rubber compositions. It is considered herein that a contribution of such relatively large size carbon black is to promote cut growth resistance to the sidewall rubber composition.

In particular, a precipitated silica is required by this invention to be used in combination with the larger size carbon black as reinforcement for the natural rubber/cis-1,4-polybutadiene sidewall rubber composition. It is considered herein that a significant contribution of the silica, when used with a coupling agent, is to enhance modulus (e.g.: 300% modulus), puncture resistance, abrasion resistance, tear resistance while substantially maintaining a relatively low hysteresis for the rubber composition.

Therefore, a significant aspect for the rubber sidewall of this invention configured with a lug and groove design for ground contacting purposes is the unique combination of specified amounts of natural rubber and cis-1,4-polybutadiene rubber with spatially defined Tg's and with a specified reinforcement system of selected relatively large particle size carbon black and silica with coupling agent to achieve such rubber composition with acceptable resistance to abrasion and resistance to puncture while substantially maintaining low hysteresis (rebound physical property) and flex properties.

The natural rubber for use in this invention is a cis-1,4-polyisoprene rubber typically having a cis-1,4-content in a range of 95 to 100 percent and a Tg in a range of -65 to -70°C.

The cis -1,4-polybutadiene for use in this invention preferably has a cis-1,4-content in a range of 95 to 99 percent and a Tg in a range of -100°C to -106°C.

It is of a particular importance for this invention that the cis-1,4-polysioprene rubber and cis-1,4-polybutadiene rubber for use in this invention have spaced apart Tg's, namely Tg's that differ by at least 30°C in order that the rubbers are relatively incompatible, or immiscible, with each other in order, for example, to promote resistance to cut growth.

The relatively large size carbon black for use in this invention is evidenced by having an Iodine number in a range of 35 to 85 g/kg and a DBP value in range of 70 to 130 cm³/100g.

Representative examples of such large carbon blacks are, for example, of ASTM designations: N550, N660 and N326 rather than smaller particle sized N110, N121 and N299 carbon blacks more normally used for tread rubber compositions.

Accordingly, it is desired for the carbon black reinforcement filler not to comprise carbon blacks having an Iodine number (value) of 105 g/kg or greater.

The silica for use in this invention is preferably a precipitated silica which may be prepared by acidic precipitation of a silicate, or co-precipitation of a silicate and aluminate and, in general, are well known to those having skill in such art. Typically, such silicas have a BET surface area in a range of from 125 to 200 m²/g.

Representative examples of such silicas are, for example Hi-Sil 210, Hi-Sil 243 by PPG Industries, Zeosil 1165MP by Rhodia Inc., VN3 by Degussa and Zeopol 8745 by Huber.

For the purposes of this description, the "compounded" rubber compositions refer to the respective rubber compositions which have been compounded with appropriate compounding ingredients such as, for example, carbon black, oil, stearic acid, zinc oxide, silica, wax, antidegradants, resin(s), sulfur and accelerator(s).

For the practice of this invention, relatively large concentrations (e.g.: 3 to 6 phr) of antidegradants are used in the sidewall rubber composition in order to promote ozone and oxidation protection.

In the practice of this invention, while the sidewall rubber composition is designed to be comprised of a combination of natural rubber and cis-1,4-polybutadiene rubber, up to 15 phr of additional elastomers may be included in the composition, namely elastomers selected from isoprene/butadiene copolymer rubbers, synthetic cis-1,4-polyisoprene rubber and emulsion polymerization prepared styrene/butadiene copolymer rubber (E-SBR) although it is preferably comprised essentially of the aforesaid natural rubber and cis-1,4-polybutadiene rubber.

In general, and in one aspect, it is desired that the sidewall rubber composition, in order to have sufficient flexibility, does not comprise trans-1,4-polybutadiene, 3,4-polyisoprene, and high vinyl polybutadiene elastomers (polybutadiene rubber with greater than 50 percent vinyl content).

In the practice of this invention, various coupling agents may be used representative of which, for example are bis-(3-trialkoxysilylalkyl) polysulfides which contain from 2 to 8 sulfur atoms in its polysulfidic bridge, with an average of 3.5 to 4.5 sulfur atoms for a polysulfide material and an average of 2 to 2.6 for a disulfide material. Such alkyl groups for the alkoxy groups are preferably selected from methyl and ethyl, preferably ethyl, groups and the alkyl group for said silylalkyl moiety is selected from ethyl, propyl and butyl radicals.

Preferably, such coupling agent is a bis(3-triethoxysilylpropyl) polysulfide material.

It is readily understood by those having skill in the art that the rubber compositions of the sidewall would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, may comprise 0.5 to 10 phr, usually 1 to 5 phr. Typical amounts of processing aids may comprise 1 to 10 phr, if used. Such processing aids can include, for example, aromatic, naphthenic, and/or paraffinic processing oils. Representative silicas may be, for example, hydrated amorphous silicas. Typical amounts of antioxidants comprise 1 to 3 phr. Representative antioxidants may be, for example, diphenyl-p-phenylenediamine and others, such as, for example, those disclosed in The Vanderbilt Rubber Handbook (1978), pages 344-346. Typical amounts of antiozonants for the sidewall composition may comprise 3 to 6 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The presence and relative amounts of the above additives are considered to be not an aspect of the present invention which is more primarily directed to the utilization of specified blend of natural rubber and cis-1,4-polybutadiene rubber in tire sidewalls with outer surface of lug and groove configuration designed to be ground-contacting as a sulfur vulcanizable composition which reinforced with a specified combination of relatively large particle sized carbon black together with precipitated silica and coupling agent.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from 0.5 to 2.25 being preferred.

Accelerators, including primary and optionally secondary accelerators, are used to control the time and/or temperature required for vulcanization and to improve the properties of the vulcanizate. Often accelerators are used in an amount ranging from 0.5 to 2.0 phr. Such accelerators may be, for example, various amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not necessarily considered to be an aspect of this invention.

Sometimes a combination of antioxidants, antiozonants and waxes may be collectively referred to as "antidegradants".

The tire can be built, shaped, molded and cured by various methods which will be readily apparent to those having skill in such art.

The prepared tire of this invention is conventionally shaped and cured by methods known to those having skill in such art.

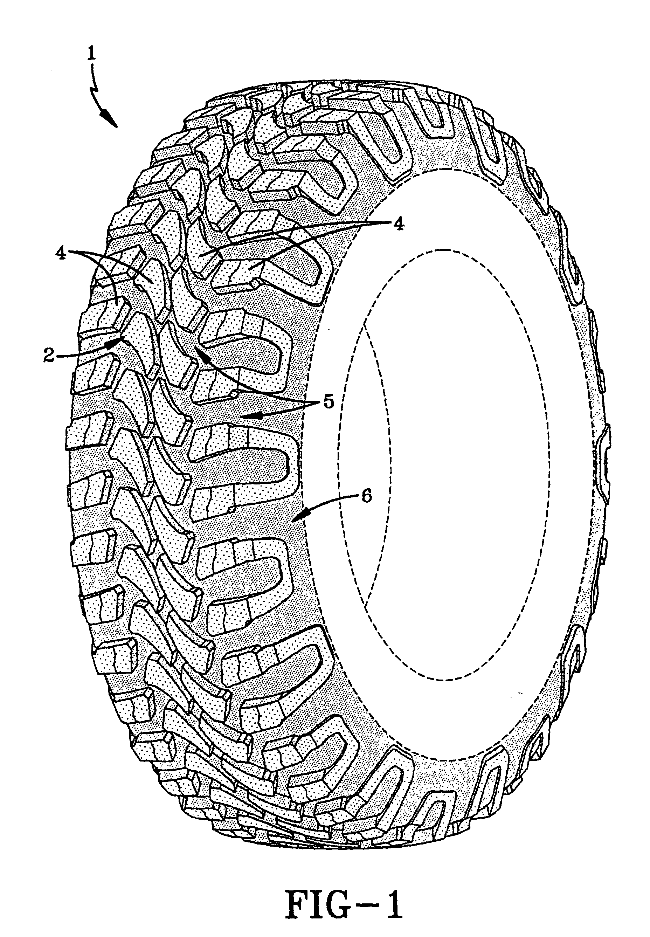

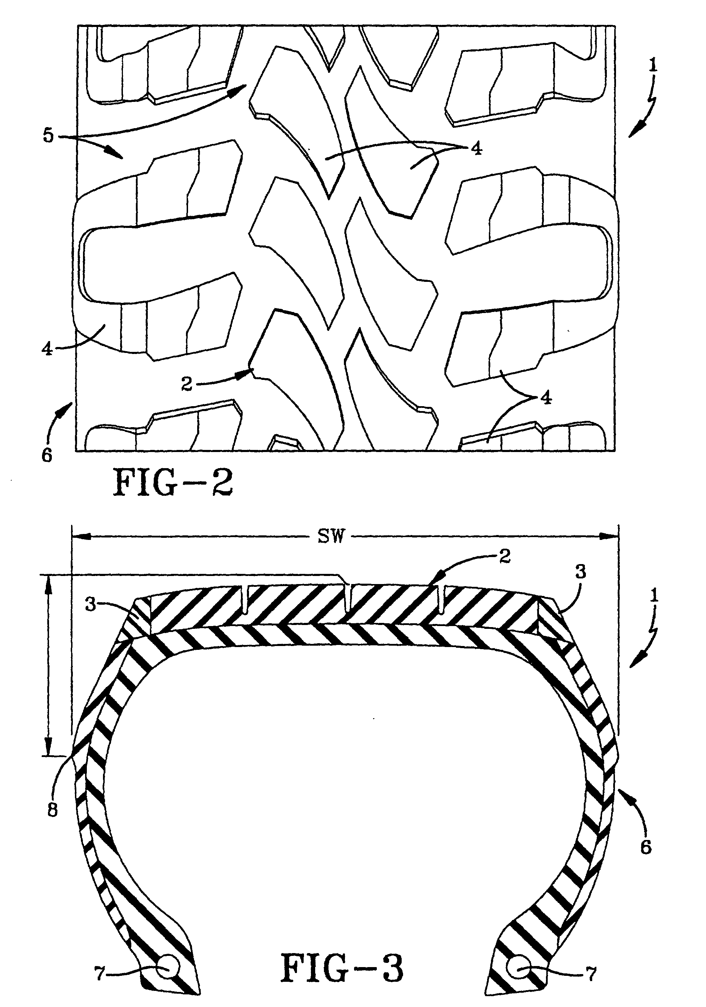

For a further understanding of this invention, reference is made to the accompanying drawings in which FIG 1 is a perspective view of a tire, FIG 2 depicts a sectional view of a tire tread and a portion of its sidewalls and FIG 3 is a tire cross-section.

In particular, in the drawings is seen a tire 1 having a carcass with circumferential rubber tread 2, with tread miniwings 3, having a lug 4 and groove 5 configuration and connecting sidewalls 6.

Uniquely, a portion of the tread 2 with its lug 4 and groove 5 configuration extends to a maximum section width (SW) at position 8 on the sidewall 6 portion adjacent to the tread 2 which is greater than 30 percent, and approximates about 50 percent, of the sidewall 6 surface.

In particular, the configured outer surface of the sidewall 6 itself, including the lug 4 and groove 5 configuration thereon and extending to the bead 7 region of the tire, is of the rubber composition of this invention, namely of the natural rubber and cis-1,4-polybutadiene rubber with Tg's spaced apart by at least 30°C together with the reinforcement of large particle sized carbon black and silica plus coupling agent.

The invention may be better understood by reference to the following examples in which the parts and percentages are by weight unless otherwise indicated.

### REFERENTIAL EXAMPLE I

Mixtures of natural rubber and cis-1,4-polybutadiene rubber are prepared with carbon black particulate reinforcement and are identified herein as Samples A, B and C, with Sample A being a carbon black reinforced Control and with Samples B and C containing silica reinforcement together with a coupling agent.

Ingredients for the elastomer compositions are shown in the following Table 1.

**Table 1**

| **Material** | **Parts Sample A (Control)** | **Parts Sample B** | **Parts Sample C** |
|---|---|---|---|
| **Non-Productive Mixing** | | | |
| Natural rubber¹ | 35 | 50 | 50 |
| Cis-1,4-polybutadiene² | 65 | 50 | 50 |
| Carbon black³ (large particle size) | 51 | 30 | 30 |
| Silica A⁴ | 0 | 30 | 0 |
| Silica B⁵ | 0 | 0 | 30 |
| Coupling agent composite⁶ | 0 | 5 | 5 |
| Processing oil (paraffinic) | 11 | 0 | 0 |
| Antiozonant⁷ | 4 | 4 | 4 |
| Antioxidant⁸ | 0 | 2 | 2 |

| **Productive Mixing** | | | |
|---|---|---|---|
| Sulfur | 2 | 1 | 1 |
| Accelerators⁹ | 0.6 | 1.0 | 1.0 |
| Antioxidant¹⁰ | 1.25 | 0 | 0 |

| | | | |
|---|---|---|---|
| Conventional amounts of antidegradants, as well as fatty acid (stearic acid) zinc oxide, sulfur and accelerators were used. 1. Natural cis-1,4-polyisoprene rubber having a Tg of -65°C to -70°C. | | | |
| 2. Cis-1,4-polybutadiene as BUDENE® 1207 from The Goodyear Tire & Rubber Company having a cis-1,4-content of 99 and a Tg of -103°C. | | | |
| 3. N550 having an Iodine value of 43 g/kg and a DBP value of 121 cm³/100g. | | | |
| 4. Hi-Sil 243 silica from PPG Industries having a BET (nitrogen) surface area of 150m²/g. | | | |
| 5. Zeopol 8745 silica from Huber having a BET (nitrogen) surface area of 180 m²/g. | | | |
| 6. Composite of as X50S from Degussa AG as a combination of bis(3-triethoxysilylpropyl) tetrasulfide coupling agent and carbon in a 50/50 ratio. | | | |
| 7. Antiozonant of the p- phenylenediamine type | | | |
| 8. Antioxidant as a polymerized trimethyl dihydroquinoline type | | | |
| 9. Of the sulfenamide and guanidine type. | | | |
| 10. Mixed diaryl phenylenediamine type | | | |

### REFERENTIAL EXAMPLE II

The prepared rubber compositions were cured at a temperature of 150°C for 36 minutes and the resulting cured rubber samples evaluated for their physical properties as shown in the following Table 2. The Samples A, B and C correspond to Samples A, B and C of Example I.

**Table 2**

| **Properties** | **Sample A (Control)** | **Sample B** | **Sample C** |
|---|---|---|---|
| **Rheometer**^{**1**} **(150°C)** | | | |
| a. Min torque (dN-m) | 6.0 | 8.9 | 9.5 |
| b. Max torque (dN-m) | 24.0 | 31.8 | 32.5 |

| **Stress-Strain Properties** | | | |
|---|---|---|---|
| a. 300% Modulus(MPa) | 4.6 | 7.6 | 8.0 |
| b. Tensile (MPa) | 13.7 | 17.4 | 18.0 |
| c. Elongation (%) | 714 | 641 | 645 |
| **Tear**² (force in Newtons) (Strebler at 95°C) | 179 | 262 | 232 |
| **Fatigue-to-failure** ³ (cycles)(cam#18) | 1412 | 1386 | 1440 |
| **DIN abrasion** (10 Newtons), cm³ lost | 95 | 69 | 58 |
| **Rebound** (100°C) | 57.8 | 58.9 | 60 |
| **Hardness,** Shore A, 100°C | 42.6 | 52.4 | 52.6 |
| **Blade penetration** (mm)⁴ | 1.6 | 1.3 | 1.3 |
| **Energy penetration**⁵ (Joules) | 1.8 | 2.9 | 3.2 |

| | | | |
|---|---|---|---|
| 1. Torque applied by an oscillating disk to uncured rubber samples which cures during the test. | | | |
| 2. Force required to pull apart 5mm wide strips (180° pull) a measure of adherence to itself. | | | |
| 3. Dynamic test performed on dumbbell cured rubber samples by continuous flexing at one Hertz. | | | |
| 4. The Blade Penetration test (about 25°C) can generally be described as a 5.3 g blade attached to a 105.4 cm pendulum released from 15° from vertical and the depth of penetration is measured. A lower value is better (Samples B and C) and is indicative of better resistance to puncturing objects which is a desirable property for the tire sidewall of a lug and groove configuration of this invention. | | | |
| 5. The Energy Penetration test (about 25°C)can generally be described as a 45° angle, 4.76 mm diameter, 18 g indentor driven into a rubber sample block at constant speed of 100 mm/min. Energy to penetrate to a given depth is recorded. A higher value is better (Samples B and C) and is indicative of better resistance to puncturing objects which is a desirable property for the tire sidewall with the lug and groove configuration of this invention. | | | |

As it can readily be seen from Table 2, the 300% modulus, tensile, tear, hardness, abrasion and penetration resistance properties of Samples B and C are significantly higher than those of Control Sample A and are seen as being indicative as promoting better resistance to penetration, tear, abrasion and puncturing objects which are desirable properties for the tire sidewall of a lug and groove configuration of this invention which is designed to be ground-contacting.

As it can further be seen from Table 2, the tensile strength and resistance to tear properties of Samples B and C are significantly higher than those of Control Sample A and are seen as promoting greater strength, resistance to puncturing objects and better resistance to tearing which are desirable properties for the tire sidewall of a lug and groove configuration of this invention.

As it also can be seen from Table 2, the DIN abrasion resistance property of Samples B and C is significantly improved (less rubber loss) over that of Control Sample A which is a desirable feature for the tire sidewall with lug and groove configuration of this invention designed to be ground contacting which indicates a greater resistance to scuffing and abrading away in off-road applications.

Another significant aspect observed from the properties reported in Table 2 is that hysteresis, as indicated by the 100°C Rebound values, was unexpectedly substantially maintained at high temperatures (100°C). This is also a desirable feature for the tire sidewall with lug and groove configuration of this invention where relatively low heat buildup under operating conditions as well as promoting good economy for vehicular operation are important.

Furthermore, as shown in Table 2, it was unexpectedly found that the flex properties were maintained with rubber compositions of substantially higher 300% modulus and tensile strength. It is considered herein that one having skill in the rubber compounding art would normally expect that the flex property would have been negatively affected.

Although the mechanism may not be completely understood, it is believed that the improved cut growth resistance for Samples B and C is due to a network formed via the combination of silane coupling agent, silica, carbon black and unique polymer blend.

## Claims

1. A pneumatic rubber tire (1) having a carcass with circumferential rubber tread and associated sidewalls, wherein said tread (2) and a portion of said sidewalls (6), are of a lug (4) and groove (5) configuration designed to be ground-contacting, wherein said lug (4) and groove (5) configuration extends from said tread over at least thirty percent of the tire sidewall (6) adjacent to said tread **characterised in that** a major portion of said lug and groove configured portion of said sidewall is of a rubber composition which comprises, based on 100 parts by weight rubber (phr), (A) elastomers comprised of (i) 40 to 80 phr of cis-1,4-polyisoprene natural rubber having a Tg in a range of -65°C to -70°C and (ii) 20 to 60 phr of cis-1,4-polybutadiene rubber having a Tg in a range of -100°C to -106°C, (B) 55 to 80 phr of reinforcing filler comprised of carbon black and precipitated silica which is comprised of (i) 5 to 40 phr of carbon black having an Iodine number of 35 to 85 g/kg and a dibutylphthalate (DBP) value of 70 to 130 cm³/100g and (ii) 10 to 70 phr of precipitated silica having a BET surface area of 125 to 200 m²/g; wherein the weight ratio of silica to carbon black is in a range of 0.3/1 to 3/1 and (C) a coupling agent having a moiety reactive with silanol groups on said silica and another moiety interactive with said elastomers.

2. The tire (1) of claim 1 **characterized in that** said lug (4) and groove (5) configuration extends from said tread (2) over at least fifty percent of the tire sidewall (6) adjacent to said tread.

3. The tire (1) of claim 1 **characterized in that** said lug (4) and groove (5) configuration extends from said tread (2) over the tire sidewall (6) adjacent to said tread to at least the maximum section width (SW) of the tire.

4. The tire (1) of any of the preceding claims **characterized in that** said sidewall rubber composition does not comprise elastomers having a Tg in a range of -70°C and -100°C.

5. The tire (1) of any of the preceding claims **characterized in that** the carbon black reinforcing filler does not comprise carbon blacks having an Iodine value of 105 g/kg or greater.

6. The tire (1) of any of the preceding claims **characterized in that** said sidewall rubber composition does not comprise trans-1,4-polybutadiene, 3,4-polyisoprene, and high vinyl polybutadiene elastomer having a vinyl content of greater than fifty percent.

7. The tire (1) of any of the preceding claims **characterized in that** said sidewall rubber composition contains 5 to 15 phr of at least one additional elastomers selected from at least one of isoprene/butadiene copolymer rubber, synthetic cis-1,4-polyisoprene rubber and emulsion polymerization prepared styrene/butadiene copolymer rubber.

8. The tire (1) of any of the preceding claims **characterized in that**, for said sidewall composition, said coupling agent is a bis-(3-trialkoxysilylalkyl) polysulfide which contains from 2 to 8, with an average of (i) 2 to 2.6 or (ii) 3.5 to 4.5, sulfur atoms in its polysulfidic bridge.

9. The tire (1) of any of the preceding claims **characterized in that**, for said sidewall composition, said coupling agent is a bis-(3-triethoxysilylpropyl) polysulfide material.

10. The tire (1) of any of the preceding claims **characterized in that**, for said sidewall composition, said carbon black is selected from at least one of N550, N660, and N326 carbon blacks.

## Patentansprüche

1. Luftgummireifen (1) mit einer Karkasse mit Umfangsgummilauffläche und verbundenen Seitenwänden, wobei die Lauffläche (2) und ein Teil der Seitenwände (6) eine Gestaltung mit Stollen (4) und Rillen (5) aufweisen, die für den Bodenkontakt ausgelegt ist, die Gestaltung mit Stollen (4) und Rillen (5) sich von der Lauffläche über mindestens 30% der Reifenseitenwand (6) erstreckt, die an die Lauffläche angrenzt, **dadurch gekennzeichnet, dass** ein Hauptteil des mit Stollen und Rillen gestalteten Teils der Seitenwand aus einer Kautschukzusammensetzung ist, welche, bezogen auf 100 Gew.-Teile Kautschuk (ThK), umfasst (A) Elastomere umfassend (i) 40 bis 80 ThK cis-1,4-Polyisopren-Naturkautschuk mit einer Tg im Bereich von -65°C bis -70°C und (ii) 20 bis 60 ThK cis-1,4-Polybutadien-Kautschuk mit einer Tg im Bereich von - 100°C bis -106°C, (B) 55 bis 80 ThK Verstärkungsfüllstoff umfassend Ruß und gefällte Kieselsäure, welcher umfasst (i) 5 bis 40 ThK Ruß mit einer lod-Zahl von 35 bis 85 g/kg und einer Dibutylphthalat (DBP)-Zahl von 70 bis 130 cm³/100 g und (ii) 10 bis 70 ThK gefällte Kieselsäure mit einer BET-Oberfläche von 125 bis 200 m²/g, wobei das Gewichtsverhältnis von Kieselsäure zu Ruß im Bereich von 0,3/1 bis 3/1 liegt, und (C) einen Haftvermittler mit einer Gruppe, die mit Silanolgruppen auf der genannten Kieselsäure reaktiv ist, und einer anderen Gruppe, die mit den genannten Elastomeren wechselwirkt.

2. Reifen (1) nach Anspruch 1, **dadurch gekennzeichnet, dass** die Gestaltung mit Stollen (4) und Rillen (5) sich von der Lauffläche (2) über mindestens 50% der Reifenseitenwand (6) erstreckt, die an die Lauffläche angrenzt.

3. Reifen (1) nach Anspruch 1, **dadurch gekennzeichnet, dass** die Gestaltung mit Stollen (4) und Rillen (5) sich von der Lauffläche (2) über die Reifenseitenwand (6), die an die Lauffläche angrenzt, bis mindestens zur maximalen Querschnittsbreite (SW) des Reifens erstreckt.

4. Reifen (1) nach irgendeinem der vorhergehenden Ansprüche, **dadurch gekennzeichnet, dass** die Seitenwand-Kautschukzusammensetzung keine Elastomere mit einer Tg im Bereich von -70°C bis -100°C umfasst.

5. Reifen (1) nach irgendeinem der vorhergehenden Ansprüche, **dadurch gekennzeichnet, dass** der Ruß-Verstärkungsfüllstoff keine Rußsorten mit einer lod-Zahl von 105 g/kg oder mehr umfasst.

6. Reifen (1) nach irgendeinem der vorhergehenden Ansprüche, **dadurch gekennzeichnet, dass** die Seitenwand-Kautschukzusammensetzung kein trans-1,4-Polybutadien, kein 3,4-Polyisopren und kein Polybutadien-Elastomer mit hohem Vinylgehalt mit einem Vinylgehalt von mehr als 50% umfasst.

7. Reifen (1) nach irgendeinem der vorhergehenden Ansprüche, **dadurch gekennzeichnet, dass** die Seitenwand-Kautschukzusammensetzung 5 bis 15 ThK mindestens eines zusätzlichen Elastomers ausgewählt aus mindestens einem von Isopren/Butadien-Copolymerkautschuk, cis-1,4-Polyisopren-Synthesekautschuk und durch Emulsionspolymerisation hergestelltem Styrol/Butadien-Copolymerkautschuk enthält.

8. Reifen (1) nach irgendeinem der vorhergehenden Ansprüche, **dadurch gekennzeichnet, dass** der Haftvermittler für die Seitenwandzusammensetzung ein Bis(3-trialkoxysilylalkyl)polysulfid ist, welches 2 bis 8 Schwefelatome mit einem Mittel von (i) 2 bis 2,6 oder (ii) 3,5 bis 4,5 Schwefelatomen in der Polysulfidbrücke enthält.

9. Reifen (1) nach irgendeinem der vorhergehenden Ansprüche, **dadurch gekennzeichnet, dass** der Haftvermittler für die Seitenwandzusammensetzung ein Bis(3-triethoxysilylpropyl)polysulfid-Material ist.

10. Reifen (1) nach irgendeinem der vorhergehenden Ansprüche, **dadurch gekennzeichnet, dass** der Ruß für die Seitenwandzusammensetzung ausgewählt ist aus den Rußsorten N550, N660 und/oder N326.

## Revendications

1. Bandage pneumatique en caoutchouc (1) possédant une carcasse comprenant une bande de roulement circonférentielle en caoutchouc et des flancs associés, dans lequel ladite bande de roulement (2) et une portion desdits flancs (6) possèdent une configuration du type à barrettes (4) et à rainures (5) conçue pour entrer en contact avec le sol, dans lequel ladite configuration du type à barrettes (4) et rainures (5) s'étend depuis ladite bande de roulement sur au moins 30 % du flanc (6) du bandage pneumatique, en position adjacente à ladite bande de roulement, **caractérisé en ce qu'**une portion majeure de ladite portion de configuration du type à barrettes et à rainures dudit flanc possède une composition de caoutchouc qui comprend, basées sur 100 parties en poids de caoutchouc (phr), (A) des élastomères comprenant (i), à concurrence de 40 à 80 phr, du caoutchouc naturel de cis-1,4-polyisoprène possédant une température de transition vitreuse dans la plage de -65 °C à -70 °C et (ii), à concurrence de 20 à 60 phr, un caoutchouc de cis-1,4-polybutadiène possédant une température de transition vitreuse dans la plage de - 100 °C à -106 °C, (B), à concurrence de 55 à 80 phr une matière de charge de renforcement comprenant du noir de carbone et de la silice précipitée, qui comprend (i), à concurrence de 5 à 40 phr, du noir de carbone possédant un indice d'iode de 35 à 85 g/kg et une valeur d'absorption du dibutylphtalate (DBP) de 70 à 130 cm³ /100 g et (ii), à concurrence de 10 à 70 phr, de la silice précipitée possédant une aire de surface BET de 125 à 200 m²/g ; dans lequel le rapport pondéral de la silice au noir de carbone se situe dans la plage de 0,3/1 à 3/1, et (C) un agent de couplage possédant une fraction apte à réagir avec des groupes silanols sur ladite silice et une autre fraction agissant de manière réciproque avec lesdits élastomères.

2. Bandage pneumatique (1) selon la revendication 1, **caractérisé en ce que** ladite configuration du type à barrettes (4) et à rainures (5) s'étend depuis ladite bande de roulement (2) sur au moins 50% du flanc (6) du bandage pneumatique, en position adjacente à ladite bande de roulement.

3. Bandage pneumatique (1) selon la revendication 1, **caractérisé en ce que** ladite configuration du type à barrettes (4) et à rainures (5) s'étend depuis ladite bande de roulement (2) par-dessus le flanc (6) du bandage pneumatique en position adjacente à ladite bande de roulement jusqu'au moins la grosseur du boudin maximale (SW) du bandage pneumatique.

4. Bandage pneumatique (1) selon l'une quelconque des revendications précédentes, **caractérisé en ce que** ladite composition de caoutchouc pour flanc ne comprend pas des élastomères possédant une température de transition vitreuse dans la plage de -70 °C à -100 °C

5. Bandage pneumatique (1) selon la revendication 1, **caractérisé en ce que** la matière de charge de renforcement à base de noir de carbone ne comprend pas des noirs de carbone possédant un indice d'iode de 105 g/kg ou plus.

6. Bandage pneumatique (1) selon la revendication 1, **caractérisé en ce que** ladite composition de caoutchouc pour flanc ne comprend pas du trans-1,4-polybutadiène, du 3,4-polyisoprène et un élastomère de polybutadiène à teneur élevée en groupe vinyle possédant une teneur en groupes vinyle supérieure à 50%.

7. Bandage pneumatique (1) selon la revendication 1, **caractérisé en ce que** ladite composition de caoutchouc pour flanc contient, à concurrence de 5 à 15 phr, au moins un élastomère supplémentaire choisi parmi le groupe comprenant un caoutchouc de copolymère d'isoprène/butadiène, un caoutchouc synthétique de cis-1,4-polyisoprène et un caoutchouc de copolymère de styrène/butadiène préparé par polymérisation en émulsion.

8. Bandage pneumatique (1) selon la revendication 1, **caractérisé en ce que**, pour ladite composition de flanc, ledit agent de couplage est un bis-(3-trialcoxysilylalkyl)polysulfure qui contient de 2 à 8, avec une moyenne de (i) 2 à 2,6 ou (ii) de 3,5 à 4,5, atomes de soufre dans son pont polysulfure.

9. Bandage pneumatique (1) selon la revendication 1, **caractérisé en ce que**, pour ladite composition de flanc, ledit agent de couplage est une matière à base de bis-(3-triéthoxysilylpropyl)-polysulfure.

10. Bandage pneumatique (1) selon la revendication 1, **caractérisé en ce que**, pour ladite composition de flanc, ledit noir de carbone représente au moins un membre choisi parmi le groupe comprenant des noirs de carbone N550, N660 et N326.
